# EUROPEAN PATENT APPLICATION

(11) **EP 4 287 037 A1**
(43) Date of publication of application: **06.12.2023**
(21) Application number: 22176917.7
(22) Date of filing: 02.06.2022
(51) Int. Cl.: G06F 16/2452

(54) **A METHOD FOR GENERATING A QUERY PERTAINING TO AN INDUSTRIAL AUTOMATION CONTROL SYSTEM**

(71) Applicant: Siemens Aktiengesellschaft, 80333 München (DE)
(72) Inventor: Thuluva, Aparna Saisree, 81739 München (DE); Anicic, Darko, 81379 München (DE)
(74) Representative: Siemens Patent Attorneys

(57) **Abstract**

The disclosed embodiments relate to a computer-implemented method for generating a query for querying an ontology pertaining to at least one component of an industrial automation control system, the ontology being a result of a transformation of a nodeset defined by a graph-based OPC UA information model for industrial automation purposes. The ontology may be loaded in a triple store supporting a maximum query efficiency.

## Description

### TECHNICAL FIELD

The disclosed embodiments generally relate to the field of industrial automation control systems. Specifically, the disclosed embodiments relate to a computer-implemented method for generating a query for querying an ontology pertaining to at least one component of an industrial automation control system.

### BACKGROUND

Industrial automation control systems are designed to capture real-world instrumentation data, e.g., sensor data and actuate responses in real time, while operating reliably and safely. In recent times, semantic web technologies including a usage of semantic information models have gained a predominant role in specifying communicative and behavioral aspects of such components.

Industrial automation standards such as OPC UA (Open Platform Communications Unified Architecture) enable semantic interoperability between industrial machines from diverse domains by providing information models. These information models may be defined in formats such as XML (Extensible Markup Language), a textual format that is both human-readable and machinereadable. The industrial automation standard OPC UA provides rich semantics defined by domain experts in terms of its information models.

Information modelling is a key concept in the quest to enable industrial automation control systems not only to deliver or consume data but also the express a meaning of data. Accordingly, semantic web formats such as RDF (Resource Description Framework), RDFS (RDF Schema), OWL (Web Ontology Language), SPARQL (SPARQL Protocol and RDF Query Language), etc. along with a large number of tools to efficiently create, store and query information models have been developed by semantic web communities.

Transforming graph-based industrial information models into a formal semantic representation of an ontology, e.g., an OWL ontology, has proven beneficial for a number of application cases being concerned with information retrieval and processing, such as querying huge industrial information models, validating these information models, providing data efficiently to industrial process analytics etc. The Applicant has proposed a corresponding method for transforming a data model for automation purposes into a target ontology which was published in the International Patent Application WO2020/104019A1.

While the industrial automation standard OPC UA is providing a generic information model for domain-independently describing industrial machines in general, the generic information model is designed to be extended by specific information models being defined in the form of so called OPC UA companion specifications.

These OPC UA Companion Specifications - or companion specifications in the following - are typically developed by domain experts, standardization bodies or industrial machine suppliers for defining domain-specific information models extending the generic OPC UA information model for various domains such as Robotics, CNC machines, Machine tools, Device integration, etc. Further on, some companion specifications have been developed to map other existing industrial communication standards to OPC UA, including AutomationML, PLCOpen, ISA-95, etc.

It is to be expected that semantics of particular skills like drilling or clamping will be standardized in the near future. A promising approach to standardize domain-specific semantics for a huge part of the automation domain - e.g., plastics and rubber machinery, machine vision, robotics, powertrain, weighing, CNC, etc. - is envisaged by a mechanical engineering industry association called VDMA, or German: »Verband Deutscher Maschinen- und Anlagenbau«. The developed domain-specific semantics are going to be standardized within an OPC UA Companion Specification, leading to a new level of semantic interoperability in the automation domain.

However, as for the generic OPC UA information standard itself, the information models of the companion specifications are defined in an XML format. Although considered as machine readable, XML is not suitably machine interpretable. In particular, the XML format intricates multiple queries of specific nodes in the information model for the reason that parsing the node across the entire node hierarchy is necessary each time the node is to be accessed. In summary, there is no efficient query mechanism for OPC information models today.

This problem has been solved by formalizing or transforming OPC information models in an ontology language such as OWL as described in the above mentioned International Patent Application WO2020/104019A1, the application being incorporated herein by reference in its entirety. The transformation of a graph-based OPC information model - or in other words: an OPC UA nodeset - for industrial automation purposes into an ontology stored in a triple store enables efficient querying of the transformed information model. To this end, the OPC UA nodeset is represented as an ontology formulated in an OWL language enabling for queries formulated in SPARQL for querying the information in the initial OPC UA nodeset.

Querying this transformed ontology - i.e., said ontology being a result of a transformation of a nodeset defined by a graph-based OPC UA information model for industrial automation purposes - is, however, still challenging, as a user formulating the query has to be a semantic expert to formulate the SPARQL query and, at the same time, an OPC UA expert to understand the semantics defined in the OPC UA nodeset file.

These problems are due to the fact that the structure of the transformed ontology preserves large portions of the initial graph based structure after transforming the graph based node hierarchy into a hierarchical structure of OWL restrictions. Although accessing a node under consideration (e.g., for determining parameters or components assigned to said node under consideration) using the ontology is much faster than accessing the node under consideration in the underlying graph-based information model, a formulation of a query for parsing the specific node under consideration remains intricate because the query structure to parse the node under consideration has to describe the path across the entire node hierarchy.

Still today it is a very challenging task to query meaningful information or live data from industrial machines based on the standardized semantics defined in an OPC UA companion specification.

Accordingly, there is a need in the art for a computer-implemented or at least computer-assisted method for formulating a query from OPC UA information model or, specifically from OPC UA companion specifications.

### SUMMARY AND DESCRIPTION

The present invention relates to a computer-implemented method for generating a query for querying an ontology pertaining to at least one component of an industrial automation control system, wherein the ontology is a result of a transformation of a nodeset defined by a graph-based information model for industrial automation purposes. The method includes the steps of:
- loading the ontology into a triple store;
- accessing a node identification table for retrieving a browse path and decomposing the browse path into an ordered sequence of node names;
- composing a selection query including a plurality of selection criteria, wherein
   - at least one selection criterion is applied to a node name in said ordered sequence of node names, the at least one selection criterion requiring a node assigned to said node name of having instantiated either a component or a property in said graph-based information model, said component or said property being a successor node in the ordered sequence of node names; and;
   - at least one selection criterion is referring to a node name of a preceding selection criterion in said plurality of selection criteria.
- structuring the query by a semantic ontology language using the selection query and outputting the query.

The present embodiments further relate to a query generation unit comprising a processor and a data storage device having stored thereon computer executable program code, which, when executed by the processor, causes the processor to perform the above method.

### DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1:: is a flow or process diagram of a method of generating a query according to an embodiment; and;
- FIG. 2:: is a schematic representation of a graph-based hierarchical node set.

### DETAILED DESCRIPTION

Until today formulating a search query for querying an ontology - being a result of a transformation of a nodeset defined by a graph-based information model for industrial automation - has to be solved manually, where experts skilled in both, Semantic Web technologies and OPC UA information models, manually formulate the SPARQL queries, which is a tedious and time taking task.

About thirty OPC UA companion specifications currently exist and more OPC UA companion specifications are currently under development. There are already thousands of devices using the OPC UA standard. Given these figures, it seems neither feasible nor scalable to maintain the present practice of manually formulating SPARQL queries. Embodiments disclosed herein are aiming to automate formulating theses queries from OPC UA information model in general or, specifically from OPC UA companion specifications.

Throughout this description, compound names with one or more medial capitals - e.g., the compound name »BrowsePath« as introduced below - are used to refer to authoritative names used in the specification »OPC Unified Architecture« of the OPC Foundation. These authoritative names are assumed to be known and for a person skilled in the art. Hereinafter, these authoritative names are, therefore, introduced without explanation.

An important aspect of the present embodiments is a usage of a browse path - or »BrowsePath« in OPC conventions - of one or more nodes defined by the OPC Foundation for a companion specification. The following section illustrates the browse path or »BrowsePath« concept. A BrowsePath defines a path from a root node of an OPC UA nodeset to a node under consideration. Accordingly, the BrowsePath is an ordered set of nodes referenced from a root node to the current node under consideration.

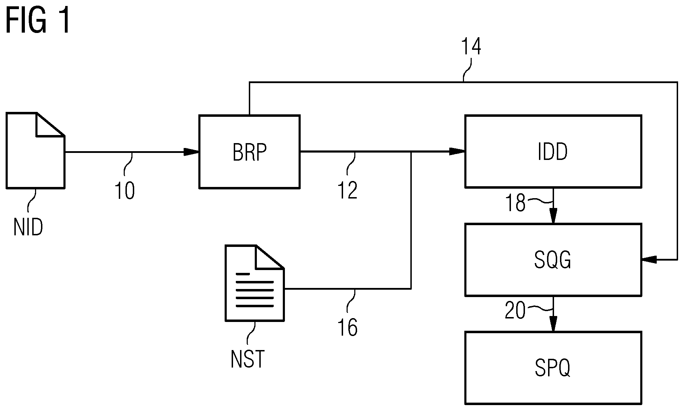

FIG. 1 is a flow or process diagram of a method of generating a query according to an embodiment. In a first step 10 a node identification table NID may be accessed for identifying and extracting a browse path to a node of interest. The node of interest may be the node - or one of the nodes - being queried for by the query to be generated. The node may be embodied as a specific OPC UA node or as an OPC UA node in an OPC UA Information Model. Querying a node may include an act of querying the node's values, names, attributes, variables, values, methods etc.

After a browse path or a »BrowsePath« has been identified as a required BrowsePath- meaning that this browse path is required for generating the query as desired - a second step 12 is using this required browse path BRP in order to identify Instance Declarations or »InstanceDeclarations« along with their modelling rules or »ModellingRules« in order to deliver a collection IDD of InstanceDeclarations and ModellingRules within the BrowsePath.

Optionally, a method step 16 may be provided for accessing a node set NST and for identifying InstanceDeclarations along with their ModellingRules from the node set NST. This step 16 may be executed concurrently with the second step 12 or, alternatively, executed in any chronological order in relation to the execution of the second step 12.

A respective outcome of the two possible steps 12, 16 may be merged in the collection IDD of InstanceDeclarations and ModellingRules within the BrowsePath. In a following step 18, BrowsePath BRP and the collection IDD of InstanceDeclarations and ModellingRules are supplied to a SPARQL query generator SQG.

Alternatively, a step of 14 may be provided for bypassing both steps 12, 16 - skipping the process of identifying InstanceDeclarations along with their ModellingRules - and instead supplying the required BrowsePath BRP directly to the SPARQL query generator SQG.

Eventually, the SPARQL query generator SQG delivers the SPARQL query SPQ.

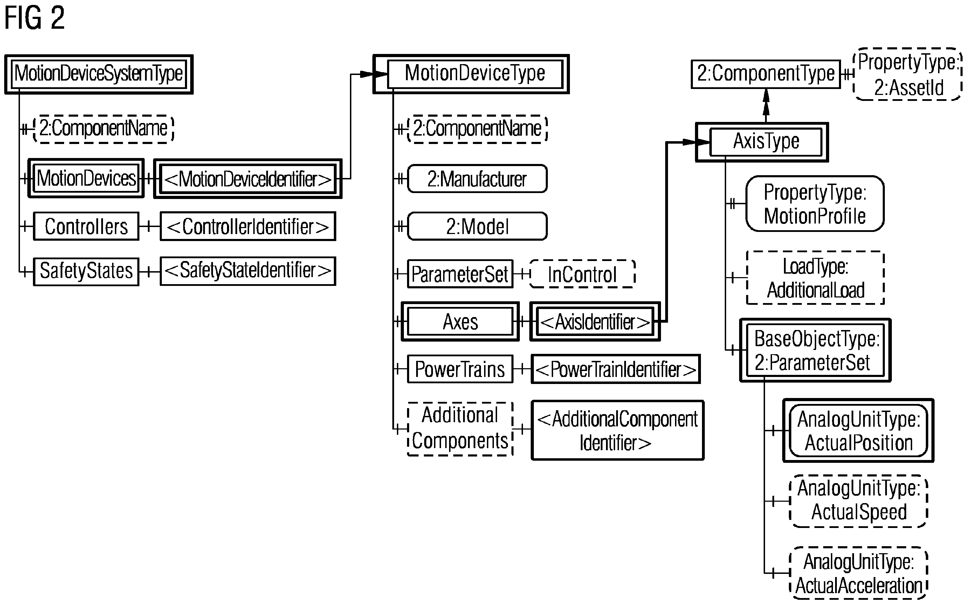

FIG. 2 shows a graphical representation of a graph-based hierarchical node set. Essentially rectangular shaped objects as shown in FIG. 2 form a respective node. Two or more nodes connected by a line as shown in the drawing form an ordered hierarchy, with an exemplary BrowsePath passing along multiple line-connected nodes.

In the following, an exemplary node under consideration is assumed to be a node »AnalogUnitType:ActualPosition« in the lower right of FIG. 2. The node »AnalogUnitType:ActualPosition« or abbreviated »ActualPosition« may, for example, express an actual position of an axis of a robot for which data expressing spatial coordinates (expressed by an AnalogUnitType data type as shown in the drawing) may have to be read out in real time from a motion device.

A browse path for this exemplary node starts at a root node named »MotionDeviceSystemType« situated in the upper left in the drawing, from there to a node named »MotionDevices« and from there on passing though the nodes named »MotionDeviceIdentifier«, »MotionDeviceType«, »Axes«, »AxisIdentifier«, »AxisType«, »ParameterSet« and »ActualPosition«.

FIG. 2 depicts the BrowsePath of the node under consideration named »ActualPosition«. FIG. 2 further shows the root node »MotionDeviceSystem« and its references to different nodes including the node named »MotionDevices« lying on the browse path and including furhter nodes named »MotionDevices«, »Controllers«, etc., which are not lying on the exemplary browse path.

The root node named »MotionDeviceSystemType« may be defined by an OPC UA companion specification entitled »Robotics NodeIds & BrowsePaths«. Said specific and further OPC UA companion specification are defined or at least published by the OPC foundation. In addition to normative instructions and explanations, each OPC UA companion specification usually includes a structured text file providing string values of the BrowsePaths in a comma-separated values file (CSV) format, the NodeIds.csv file, or node identification table. This file may be, like other resources, referenced by the OPC UA information model as it is directly accessible by an URI: http://www.opcfoundation.org/UA/schemas/Robotics/1.0/NodeIds.c sv

As stated above, an important aspect of the present embodiments is a usage of the browse path defined by the OPC Foundation for a companion specification. The embodiments use this brows path by loading the node identification table of the OPC UA information model or, more specifically: by loading the node identification table for a nodeset of a companion specification defined in accordance with the OPC UA information model. This nodeset of a partial or supplementary OPC UA information model may complement the generic OPC UA information model for the purpose of adapting the information model to a specific domain. According to the present example as depicted in FIG. 2, this specific domain is to be located in robotics.

In the robotics companion specification, the BrowsePath to the actual position of an axis of a robot is defined as fol- lows:

```
 MotionDeviceSystemType _ MotionDevices _ MotionDeviceIdentifier _ MotionDevice-
 Type _ Axes _ AxisIdentifier _ AxisType _ ParameterSet _ ActualPosition
```

The browse path is expressed as a string, where the individual node names along this path are separated by delimiters, e.g., an underscore »_« as shown above.

Along with the BrowsePath to the current node of interest named »ActualPosition« the NodeIds.csv file also delivers a node identification number or NodeId and a node class or NodeClass of each node. In the present example, the NodeId of the current node of interest named »ActualPosition« is given an integer value of 15186 and the NodeClass is specified as »Variable«.

According to the embodiments, the node identification table is loaded for retrieving one or more browse paths. A browse path is decomposed into an ordered sequence of node names. This information, the ordered sequence of node names, is then automatically converted into query path in the further course of a method according to the embodiments, preferably into a query path in a SPARQL query with the aim of retrieving the node of interest by the query along the ordered sequence of node names.

The SPARQL query is not imposed to the genuine OPC UA information model but to a transformation of the OPC UA information mode into a formal semantic representation of an ontology, e.g., an OWL ontology. The ontology itself may be loaded in a triple store supporting a maximum query efficiency.

Regardless of this transformation, the initial graph based structure of the original OPC UA nodeset structure, however, remains in the structure of the transformed ontology, in that the ordered nodes along the browse path are modelled by instantiating respective OWL restrictions of a respective OWL class. A code snippet appended at the end of this description shows excerpts of a possible source code of the transformed ontology - transformation of the OPC UA information mode into a formal ontology representation - written in OWL.

In order to create a SPARQL query for querying the node under consideration named »ActualPosition« within the ontology, the SPARQL query needs to describe the path to that node. Once the path to the node under consideration is generated, information about the references, attributes of the node can be easily retrieved, or filters or aggregate functions can be applied on the node. In this way, any node (e.g., ObjectType, VariableType, Variable, Object, Method etc.) can be accessed using an automated generated SPARQL query and its attributes, references and current values can be retrieved using the queries.

According to an embodiment, the BrowsePath is automatically converted into a path in a SPARQL query to retrieve a node. The query is generated by composing a selection query including a plurality of selection criteria and by structuring the query by a semantic ontology language, preferably SPARQL, using the selection query and eventually outputting the query, e.g., for directly querying the ontology or for further customization of the query by a user.

According to an embodiment, at least one selection criterion is applied to a node name in said ordered sequence of node names, the at least one selection criterion requiring a node assigned to said node name of having instantiated either a component or a property in said graph-based information model, said component or said property being a successor node in the ordered sequence of node names.

A code snippet below shows a possible outcome of a generated query along some known nodes of the example browse path:

```
 SELECT DISTINCT ?motionDeviceSystemType ?motionDeviceIdentiFierLabe1
 ?axisIdentifierLabel PactualPosition ?value
           WHERE {
           ?motionDeviceSystemType NS0:hasComponent | NS0:hasProperty ?motionDevices.
           ?motionDevices NS0:hasComponent | NS0:hasProperty ?motionDeviceIdentifier.
           ?motionDeviceIdentifier rdfs:label ?motionDeviceIdentiFierLabel.
           ?motionDeviceIdentifier NS0:hasTypeDefinition ?td.
           ?td rdfs:label "MotionDeviceType".
           ?motionDeviceIdentifier NS0:hasComponent | NS0:hasProperty ?axes .
           ?axes NS0:hasComponent | NS0:hasProperty ?axisIdentifier.
           ?axisIdentifier NS0:hasTypeDefinition ?td2.
           ?td2 rdfs:label "AxisType".
           ?axisIdentifier rdfs:label ?axisIdentifierLabel.
           ?axisIdentifier NS0:hasComponent | NS0:hasProperty ?parameterSet.
           ?parameterSet NS0:hasComponent | NS0:hasProperty PactualPosition.
           PactualPosition ia:value ?value.
           }
```

The code snippet shows the modeling of the known nodes »motionDeviceSystemType«, »motionDevices«, »motionDeviceIdentifier«, »MotionDeviceType«, »Axes« in the selection criteria shown above. At least one selection criterion requires a node assigned to said node name of having instantiated either a component or a property in said graph-based information model, said component or said property being a successor node in the ordered sequence of node names.

The selection criterion

```
 ?motionDeviceSystemType NS0:hasComponent | NS0:hasProperty ?motionDevices.
```

excerpted from the code snippet above requires the node assigned to the node name »motionDeviceSystemType« of having instantized either a component or a property, which is expressed by the instruction »NS0:hasComponent | NS0:hasProperty«. The outcome or instance of this instantiation is assigned to a successor node »motionDevices« in the ordered sequence of node names.

The present embodiments further require, at least one selection criterion to refer to a node name of a preceding selection criterion in said plurality of selection criteria. The second selection criterion in the second code line:

```
 ?motionDeviceSystemType NS0:hasComponent | NS0:hasProperty ?motionDevices.
 ?motionDevices NS0:hasComponent | NS0:hasProperty ?motionDeviceIdentifier.
```

declaring requirements for the node assigned to the node name »motionDevices« refers to the instance of the node name »motionDevices« of the preceding selection criterion.

In order to simplify the querying process, a preprocessing step on the graph to insert new triples into the graph automatically based on the OWL restrictions. This optional preprocessing step may include a steps of inserting at least one insert query into a source code of the ontology before loading the ontology into a triple store.

A code snippet below shows a possible first INSERT query:

```
INSERT { ?s ?p ?o }
 WHERE {
 SELECT ?s ?p ?o {
 ?s rdfs:subClassOf ?r .
 ?r rdf:type owl:Restriction .
 ?r owl:allValuesFrom ?o .
 ?r owl:onProperty ?p .
 }
 }
```

A code snippet below shows a possible second INSERT query:

```
 INSERT { ?s ?p ?o }
 WHERE {
 SELECT ?s ?p ?o {
 ?s rdfs:subClassOf ?r .
 ?r rdf:type owl:Restriction .
 ?r owl:minQualifiedCardinality ?t.
 ?r owl:onProperty ?p .
 ?r owl:onClass ?o .
 }
 }
```

With the above two insert queries, triples relating to OWL restrictions are simplified while further supporting the automatic SPARQL query generation process. The simplification is justified as follows: An OWL graph of the OWL ontology exhibits that object properties of the OWL classes are defined as OWL restrictions. The INSERT queries as shown above are advantageously effecting a replacement of at least one object restriction by at least one triple. More specifically, the INSERT queries may effect a replacement of complex object restriction OWL axioms with simple triples, thereby aiding to automate the query generation process.

The following sections refer to a consideration of Instance Declarations or »InstanceDeclaration« in the process of automatically creating a query for querying the transformed ontology. An OPC InstanceDeclaration is a node (TargetNode) of a hierarchical reference from a TypeDefinitionNode or another InstanceDeclaration.

In the current example BrowsePath there are two InstanceDeclarations in the BrowsePath as depicted in FIG. 2, namely:
MotionDeviceIdentifier; and;
AxisIdentifier.

An InstanceDeclaration in an OPC UA Companion Specification is usually a placeholder for zero or more instances. Whether zero or more instances are instantiated depends on a modeling rule or ModellingRule which is either ruling a »Mandatory-Placeholder« or an »OptionalPlaceholder«. A vendor-specific or an OPC UA server information model that instantiates the Companion Specification model may have zero or more instances of an InstanceDeclaration.

As a specific example according to the presently described robotics companion specification with a BrowsePath in accordance with FIG. 2 one can describe a robot of having one or more motion devices each having a unique MotionDeviceIdentifier such as MotionDevicel, MotionDevice2 etc. Similarly, a robot may have one or more axes such as Axisl, Axis2 etc. where integer digits 1, 2,... represent the identifiers. Accordingly, InstanceDeclarations in a companion specification are advantageously identified and handled differently than other nodes in the course of generating the SPARQL query.

In some OPC UA Companion Specifications an InstanceDeclaration usually ends with the string suffix »Identifier«. The InstanceDeclaration usually instances a TypeDefinition of a certain type. The name of the TypeDefinition usually ends with the string suffix »Type«. Accordingly, one could possibly rely on parsing a string sequence in the BrowsePath wherein the string »<some>Type« and its InstanceDeclarations are identified by »<some>Identifier« in the companion specification and wherein <some> denotes an arbitrary string. However, not all OPC UA Companion Specifications rely on this convention using the signal suffixes »Type« and »Identifier«

In case of some Companion Specifications, it is not possible or not easy to identify the InstanceDeclarations by an »Identifier« suffix. For the purpose of generating a SPARQL query, however, it is advantageous to identify the InstanceDeclarations in order to sharpen the distinctiveness of the query to be generated.

According to an advantageous embodiment, a further source - in addition to the CSV file NodeIds.csv containing the NodeIds assigned to Nodes as described above - for deriving a structure of the OPC UA nodeset may be taken into consideration. This further source may be an XML file comprising a formal definition of the Nodes defined by the Companion Specification. The formal definition is referred to as XML nodeset, i.e., a formal representation of Nodes formulated in XML notation in a file which may be named Companionspecnodeset.xml. The XML nodeset provides information about which node is an InstanceDeclaration and its ModellingRule.

Unlike other nodes in the nodeset transformed to ontology classes, an InstanceDeclaration cannot be addressed directly by its node name in the SPARQL query because the InstanceDeclaration is only a placeholder. Instances of an InstanceDeclaration are created by the vendors or the OPC servers choosing an own name for the instance created out of an InstanceDeclaration. For this reason, in the SPARQL query example introduced above - and repeated below - the labels of InstanceDeclarations are not considered.

```
 SELECT DISTINCT ?motionDeviceSystemType ?motionDeviceIdentiFierLabe1
 ?axisIdentifierLabel PactualPosition ?value
           WHERE {
           ?motionDeviceSystemType NS0:hasComponent | NS0:hasProperty ?motionDevices .
           ?motionDevices NS0:hasComponent | NS0:hasProperty ?motionDeviceIdentifier .
           ?motionDeviceIdentifier rdfs:label ?motionDeviceIdentiFierLabe1 .
           ?motionDeviceIdentifier NS0:hasTypeDefinition ?td .
           ?td rdfs:label "MotionDeviceType" .
           ?motionDeviceIdentifier NS0:hasComponent | NS0:hasProperty Paxes .
           ?axes NS0:hasComponent | NS0:hasProperty ?axisIdentifier .
```

Although the InstanceDeclaration motionDeviceIdentifier in the code snippet above is assigned to a parent node motionDevices in the excerpt code line:

```
 ?motionDevices NS0:hasComponent | NS0:hasProperty ?motionDeviceIdentifier .
```

This InstanceDeclaration motionDeviceIdentifier, however, is not (see the subsequent code lines) queried for having a component or a property. While other nodes are queried for having a component or a property by the argument »NS0:hasComponent | NS0:hasProperty«, the motionDeviceIdentifier is queried for having a label »rdfs: label« which is merely used for a return value of the query, but not for further retracing the browse path by the query:

```
 ?motionDeviceIdentifier NS0:hasTypeDefinition ?td .
 ?td rdfs:label "MotionDeviceType" .
```

Instead of being queried for having a component or a property by the argument, motionDeviceIdentifier is queried for a TypeDefinition »hasTypeDefinition« instead.

In the following section, prefix definitions of the SPARQL query to be generated on the transformed ontology are detailed. Prefixes are defined by referencing an IRI (Internationalized Resource Identifier) or URI (Uniform Resource Identifier). The following example of prefix definitions are exemplary code lines taken from the code snippet appended at the end of this description:

```
 @prefix rdf: <http://www.w3.org/1999/02/22-rdf-syntax-ns#>.
 @prefix rdfs: <http://www.w3.org/2000/01/rdf-schema#>.
 @prefix xsd: <http://www.w3.org/2001/XMLSchema#>.
 @prefix owl: <http://www.w3.org/2002/07/owl#>.
 @prefix ia: <http://opcfoundation.org/UA/Meta/IA/>.
 @prefix me: <http://opcfoundation.org/UA/Meta/>.
 @prefix ta: <http://opcfoundation.org/UA/Meta/TA/>.
 @prefix NS0: <http://opcfoundation.org/UA/>.
 @prefix xml: <http://www.w3.org/XML/1998/namespace>.
 @prefix NS1: <urn:md2edbec:OPCFoundation:CoreSampleServer>.
 @prefix NS2: <http://opcfoundation.org/UA/Diagnostics>.
 @prefix NS3: <http://opcfoundation.org/UA/DI/>.
 @prefix NS4: <http://opcfoundation.org/UA/Robotics/>.
 @prefix NS5: <http://example.kuka.robot/>.
```

All prefixes in the input ontology on which the query will be executed may be added to the SPARQL query. The generated SPARQL query is still very generic, since for the query only the RDF(S) prefixes and the OWL prefix may be required. Further on, the OPC UA base specification prefix - which is referred to as »NS0« in the query - and the »ia« prefix - which is used on instance attribute of any companion specification or any user specific model - may be required.

In summary, prefixes to be used in the query to be generated on the transformed ontology are advantageously not necessarily specific for a particular companion specification or for a specific instance model.

Moreover, all predicates, properties, or relationships used in the query are independent of any companion specification or user specific model, which again results in a generic query . Thus, the query generation process is independent of the companion specifications and it can be implemented on any companion specification or a user model that is based on a companion specification. The query generation process may be solely based on the BrowsePath concept.

According to an embodiment, the generated query may be customized by filter statements. Filter statements may be the result of configuration parameters, which a user can use to configure the query to be generated. The statement

```
 FILTER((?motionDeviceIdentifierLabel = "MotionDevice_1") && (?axisIdentifierLa-
 bel = "Axis_1"))
```

for example would only consider query results wherein a label of the MotionDeviceIdentifier is »MotionDevice_1« and wherein the label of the Axisidentifier is »Axis_1«.

According to a further embodiment, the generated query may be customized using aggregate functions. The following code snippet shows a query for querying the count of all AxisIdentifiers implemented on a robot. The BrowsePath for AxisIdentifier is the following:
MotionDeviceSystemType _ MotionDevices _ MotionDeviceIdentifier _ Axes _ AxisIdentifier

The generated SPARQL query is as follows:

```
 SELECT (COUNT(?axisIdentifier) as ?axisIdentifierCount)
           WHERE {
           ?motionDeviceSystemType NS0:hasComponent | NS0:hasProperty ?motionDevices .
           ?motionDevices NS0:hasComponent | NS0:hasProperty ?motionDeviceIdentifier .
           ?motionDeviceIdentifier rdfs:label ?motionDeviceIdentiFierLabe1 .
           ?motionDeviceIdentifier NS0:hasTypeDefinition ?td .
           ?td rdfs:label "MotionDeviceType" .
           ?motionDeviceIdentifier NS0:hasComponent | NS0:hasProperty Paxes .
           ?axes NS0:hasComponent | NS0:hasProperty ?axisIdentifier .
           }Group By(?axisIdentifier)
```

The following query above allows querying the count of all AxisIdentifiers implemented on a robot. The results of this query are grouped by their AxisIdentifiers.

Using the embodiments one can not only retrieve the required information from an OPC UA ontology on the fly, but also do aggregates on the retrieved information and apply filters on the retrieved information.

In order to enhance the usability of a generated query a user may be provided with a description of the retrieved node so that the user knows how to use it. This can be done by retrieving textual description about a node from a companion specification using natural language processing or NLP methods.

Although the present embodiments are able to generate queries for all nodes present in a companion specification, not all of them may be needed for a user. The required nodes may differ from use case to use case.

The present embodiments may be used on any OPC UA companion specification to automatically generate SPARQL queries from the OPC UA companion specification. Accordingly, the present embodiments are very useful to anyone who wants to use standardized OPC UA semantics.

Since the present embodiments approach are based on a BrowsePath concept of OPC UA, they can also be used to validate the compliance of information models which may be added or amended by vendors and/or factory owners to the OPC UA standard. The present embodiments may be helpful to check if the BrowsePaths proposed by the companion specifications are correctly used by vendors and/or factory owners.

The automatically generated SPARQL queries can be used in many platforms e.g., in low-code platforms such as Mendix, Node-RED etc. for application development based on the results from the queries, in chatbots, Industrial Edge or Cloud applications etc.

Since the queries may be generated in a systematic manner, visual graphical components may be automatically generated using these queries, thereby further simplifying the usage of these queries.

A code snippet below shows excerpts of a possible source code of the transformed ontology - transformation of the OPC UA information mode into a formal ontology representation - written in OWL:

```
 @base <http://www.w3.org/2002/07/owl#>.
 @prefix rdf: <http://www.w3.org/1999/02/22-rdf-syntax-ns#>.
 @prefix rdfs: <http://www.w3.org/2000/01/rdf-schema#>.
 @prefix xsd: <http://www.w3.org/2001/XMLSchema#>.
 @prefix owl: <http://www.w3.org/2002/07/owl#>.
 @prefix ia: <http://opcfoundation.org/UA/Meta/IA/>.
 @prefix me: <http://opcfoundation.org/UA/Meta/>.
 @prefix ta: <http://opcfoundation.org/UA/Meta/TA/>.
 @prefix NS0: <http://opcfoundation.org/UA/>.
 @prefix xml: <http://www.w3.org/XML/1998/namespace>.
 @prefix NS1: <urn:md2edbec:OPCFoundation:CoreSampleServer>.
 @prefix NS2: <http://opcfoundation.org/UA/Diagnostics>.
 @prefix NS3: <http://opcfoundation.org/UA/DI/>.
 @prefix NS4: <http://opcfoundation.org/UA/Robotics/>.
 @prefix NS5: <http://example.kuka.robot/>.
  
 NS4:i1002 ta:accessRestrictions "0"^^xsd:unsignedShort;
      ta:browseName
 "http://opcfoundation.org/UA/Robotics/MotionDeviceSystemType"^^xsd:anyURI;
      ta:description "Contains the set of controllers and motion devices in a
 closely-coupled motion device system."^^rdf:PlainLiteral;
      ta:displayName "MotionDeviceSystemType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/il002"^^xsd:anyURI;
      ta:userWriteMask "0"^^xsd:unsignedInt;
      ta:writeMask "0"^^xsd:unsignedInt;
      a owl:Class;
      rdfs:label "MotionDeviceSystemType";
      rdfs:subClassOf NS3:i15063,
                   [a owl:Restriction ;
                   owl:onProperty NS0:hasComponent ;
                   owl:allValuesFrom NS4:i5002],
                   [a owl:Restriction ;
                   owl:onProperty NS4:motionDevices ;
                   owl:allValuesFrom NS4:i5002],
                   [a owl:Restriction ;
                   owl:onProperty NS0:hasComponent ;
                   owl:allValuesFrom NS4:i5001],
                   [a owl:Restriction ;
                   owl:onProperty NS4:controllers ;
                   owl:allValuesFrom NS4:i5001],
                   [a owl:Restriction ;
                   owl:onProperty NS0:hasComponent ;
                   owl:allValuesFrom NS4:i5010],
                   [a owl:Restriction ;
                   owl:onProperty NS4:safetyStates ;
                   owl:allValuesFrom NS4:i5010].
                   NS4:i1003 ta:accessRestrictions "0"^^xsd:unsignedShort;
      ta:browseName
 "http://opcfoundation.org/UA/Robotics/ControllerType"^^xsd:anyURI;
      ta:description "The ControllerType describes the control unit of motion
 devices. One motion device system can have one or more instances of the Control-
 lerType. "^^rdf:PlainLiteral;
      ta:displayName "ControllerType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/i1003"^^xsd:anyURI;
      ta:userWriteMask "0"^^xsd:unsignedInt;
      ta:writeMask "0"^^xsd:unsignedInt;
      a owl:Class;
      rdfs:label "ControllerType";
      rdfs:subClassOf NS3:i15063,
                   [a owl:Restriction ;
                   owl:onProperty NS0:hasComponent ;
                   owl:minQualifiedCardinality "0"^^xsd:nonNegativeInteger
 ;
                   owl:onClass NS4:i5004],
                   [a owl:Restriction ;
                   owl:onProperty NS3:parameterSet ;
                   owl:allValuesFrom NS4:i5004],
                   [a owl:Restriction ;
                   owl:onProperty NS0:hasProperty ;
                   owl:allValuesFrom NS4:i17237],
                   [a owl:Restriction ;
                   owl:onProperty NS3:manufacturer ;
                   owl:allValuesFrom NS4:i17237],
                   [a owl:Restriction ;
                   owl:onProperty NS0:hasProperty ;
                   owl:allValuesFrom NS4:i17239],
                   [a owl:Restriction ;
                   owl:onProperty NS3:model ;
                   owl:allValuesFrom NS4:i17239],
                   [a owl:Restriction ;
                   owl:onProperty NS0:hasProperty ;
                   owl:allValuesFrom NS4:i17245],
                   [a owl:Restriction ;
                   owl:onProperty NS3:productCode ;
                   owl:allValuesFrom NS4:i17245],
                   [a owl:Restriction ;
                   owl:onProperty NS0:hasProperty ;
                   owl:allValuesFrom NS4:i17240],
                   [a owl:Restriction ;
                   owl:onProperty NS3:serialNumber ;
                   owl:allValuesFrom NS4:i17240],
                   [a owl:Restriction ;
                   owl:onProperty NS0:hasComponent ;
                   owl:allValuesFrom NS4:i17249],
                   [a owl:Restriction ;
                   owl:onProperty NS4:currentUser ;
                   owl:allValuesFrom NS4:i17249],
                   [a owl:Restriction ;
                   owl:onProperty NS0:hasComponent ;
                   owl:minQualifiedCardinality "0"^^xsd:nonNegativeInteger
 ;
                   owl:onClass NS4:i17252],
                   [a owl:Restriction ;
                   owl:onProperty NS4:components ;
                   owl:allValuesFrom NS4:i17252],
                   [a owl:Restriction ;
                   owl:onProperty NS0:hasComponent ;
                   owl:allValuesFrom NS4:i15800],
                   [a owl:Restriction ;
                   owl:onProperty NS4:software ;
                   owl:allValuesFrom NS4:i15800],
                   [a owl:Restriction ;
                   owl:onProperty NS0:hasComponent ;
                   owl:allValuesFrom NS4:i15826],
                   [a owl:Restriction ;
                   owl:onProperty NS4:taskControls ;
                   owl:allValuesFrom NS4:i15826],
                   [a owl:Restriction ;
                   owl:onProperty NS4:i18182 ;
                   owl:minQualifiedCardinality "0"^^xsd:nonNegativeInteger
 ;
                   owl:onClass [a NS4:i18918]],
                   [a owl:Restriction ;
                   owl:onProperty NS4:i4002 ;
                   owl:minQualifiedCardinality "0"^^xsd:nonNegativeInteger
 ;
                   owl:onClass [a
 <http://opcfoundation.org/UA/Robotics/%3CMotionDeviceIdentifier%3E>]].
 NS4:i1004 ta:accessRestrictions "0"^^xsd:unsignedShort;
      ta:browseName
 "http://opcfoundation.org/UA/Robotics/MotionDeviceType"^^xsd:anyURI;
      ta:description "Represents a specific motion device in the motion device
 system like a robot, a linear unit or a positioner. A MotionDevice should have at
 least one axis."^^rdf:PlainLiteral;
      ta:displayName "MotionDeviceType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/i1004"^^xsd:anyURI;
      ta:userWriteMask "0"^^xsd:unsignedInt;
      ta:writeMask "0"^^xsd:unsignedInt;
      a owl:Class;
      rdfs:label "MotionDeviceType";
      rdfs:subClassOf NS3:i15063,
                   [a owl:Restriction ;
                   owl:onProperty NS0:hasComponent ;
                   owl:allValuesFrom NS4:i5029],
                   [a owl:Restriction ;
                   owl:onProperty NS3:parameterSet ;
                   owl:allValuesFrom NS4:i5029],
                   [a owl:Restriction ;
                   owl:onProperty NS0:hasProperty ;
                   owl:allValuesFrom NS4:i16351],
                   [a owl:Restriction ;
                   owl:onProperty NS3:manufacturer ;
                   owl:allValuesFrom NS4:i16351],
                   [a owl:Restriction ;
                   owl:onProperty NS0:hasProperty ;
                   owl:allValuesFrom NS4:i16353],
                   [a owl:Restriction ;
                   owl:onProperty NS3:model ;
                   owl:allValuesFrom NS4:i16353],
                   [a owl:Restriction ;
                   owl:onProperty NS0:hasProperty ;
                   owl:allValuesFrom NS4:i16359],
                   [a owl:Restriction ;
                   owl:onProperty NS3:productCode ;
                   owl:allValuesFrom NS4:i16359],
                   [a owl:Restriction ;
                   owl:onProperty NS0:hasProperty ;
                   owl:allValuesFrom NS4:i16354],
                   [a owl:Restriction ;
                   owl:onProperty NS3:serialNumber ;
                   owl:allValuesFrom NS4:i16354],
                   [a owl:Restriction ;
                   owl:onProperty NS0:hasProperty ;
                   owl:allValuesFrom NS4:i16362],
                   [a owl:Restriction ;
                   owl:onProperty NS4:motionDeviceCategory ;
                   owl:allValuesFrom NS4:i16362],
                   [a owl:Restriction ;
                   owl:onProperty NS0:hasComponent ;
                   owl:allValuesFrom NS4:i15305],
                   [a owl:Restriction ;
                   owl:onProperty NS4:axes ;
                   owl:allValuesFrom NS4:i15305],
                   [a owl:Restriction ;
                   owl:onProperty NS0:hasComponent ;
                   owl:allValuesFrom NS4:i16443],
                   [a owl:Restriction ;
                   owl:onProperty NS4:powerTrains ;
                   owl:allValuesFrom NS4:i16443],
                   [a owl:Restriction ;
                   owl:onProperty NS0:hasComponent ;
                   owl:minQualifiedCardinality "0"^^xsd:nonNegativeInteger
 ;
                   owl:onClass NS4:i5091],
                   [a owl:Restriction ;
                   owl:onProperty NS4:flangeLoad ;
                   owl:allValuesFrom NS4:i5091],
                   [a owl:Restriction ;
                   owl:onProperty NS0:hasComponent ;
                   owl:minQualifiedCardinality "0"^^xsd:nonNegativeInteger
 ;
                   owl:onClass NS4:i16566],
                   [a owl:Restriction ;
                   owl:onProperty NS4:additionalComponents ;
                   owl:allValuesFrom NS4:i16566].
                   NS4:i1011 ta:accessRestrictions "0"^^xsd:unsignedShort;
      ta:browseName
 "http://opcfoundation.org/UA/Robotics/TaskControlType"^^xsd:anyURI;
      ta:description "Represents a specific task control active on the control-
 ler. "^^rdf:PlainLiteral;
      ta:displayName "TaskControlType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/i1011"^^xsd:anyURI;
      ta:userWriteMask "0"^^xsd:unsignedInt;
      ta:writeMask "0"^^xsd:unsignedInt;
      a owl:Class;
      rdfs:label "TaskControlType";
      rdfs:subClassOf NS3:i15063,
                   [a owl:Restriction ;
                   owl:onProperty NS0:hasComponent ;
                   owl:allValuesFrom NS4:i15883],
                   [a owl:Restriction ;
                   owl:onProperty NS3:parameterSet ;
                   owl:allValuesFrom NS4:i15883],
                   [a owl:Restriction ;
                   owl:onProperty NS0:hasProperty ;
                   owl:allValuesFrom NS4:i17873],
                   [a owl:Restriction ;
                   owl:onProperty NS3:componentName ;
                   owl:allValuesFrom NS4:i17873],
                   [a owl:Restriction ;
                   owl:onProperty NS4:i4002 ;
                   owl:minQualifiedCardinality "0"^^xsd:nonNegativeInteger
 ;
                   owl:onClass [a
 <http://opcfoundation.org/UA/Robotics/%3CMotionDeviceIdentifier%3E>]].
 NS4:i1013 ta:accessRestrictions "0"^^xsd:unsignedShort;
      ta:browseName
 "http://opcfoundation.org/UA/Robotics/SafetyStateType"^^xsd:anyURI;
      ta:description "SafetyStateType describes the safety states of the motion
 devices and controllers. One motion device system is associated with one or more
 instances of the SafetyStateType."^^rdf:PlainLiteral;
      ta:displayName "SafetyStateType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/i1013"^^xsd:anyURI;
      ta:userWriteMask "0"^^xsd:unsignedInt;
      ta:writeMask "0"^^xsd:unsignedInt;
      a owl:Class;
      rdfs:label "SafetyStateType";
      rdfs:subClassOf NS3:i15063,
                   [a owl:Restriction ;
                   owl:onProperty NS0:hasComponent ;
                   owl:allValuesFrom NS4:i5016],
                   [a owl:Restriction ;
                   owl:onProperty NS3:parameterSet ;
                   owl:allValuesFrom NS4:i5016],
                   [a owl:Restriction ;
                   owl:onProperty NS0:hasComponent ;
                   owl:minQualifiedCardinality "0"^^xsd:nonNegativeInteger
 ; owl:onClass NS4:i17221],
                   [a owl:Restriction ;
                   owl:onProperty NS4:emergencyStopFunctions ;
                   owl:allValuesFrom NS4:i17221],
                   [a owl:Restriction ;
                   owl:onProperty NS0:hasComponent ;
                   owl:minQualifiedCardinality "0"^^xsd:nonNegativeInteger
 ; owl:onClass NS4:i17225],
                   [a owl:Restriction ;
                   owl:onProperty NS4:protectiveStopFunctions ;
                   owl:allValuesFrom NS4:i17225].
                   NS4:i1018 ta:accessRestrictions "0"^^xsd:unsignedShort;
      ta:browseName
 "http://opcfoundation.org/UA/Robotics/LoadType"^^xsd:anyURI;
      ta:description "The LoadType is for describing loads mounted on the mo-
 tion device typically by an integrator or a customer."^^rdf:PlainLiteral;
      ta:displayName "LoadType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/i1018"^^xsd:anyURI;
      ta:userWriteMask "0"^^xsd:unsignedInt;
      ta:writeMask "0"^^xsd:unsignedInt;
      a owl:Class;
      rdfs:label "LoadType";
      rdfs:subClassOf NS0:BaseObjectType,
                   [a owl:Restriction ;
                   owl:onProperty NS0:hasComponent ;
                   owl:allValuesFrom NS4:i6723],
                   [a owl:Restriction ;
                   owl:onProperty NS4:mass ;
                   owl:allValuesFrom NS4:i6723],
                   [a owl:Restriction ;
                   owl:onProperty NS0:hasComponent ;
                   owl:minQualifiedCardinality "0"^^xsd:nonNegativeInteger
 ;
                   owl:onClass NS4:i6013],
                   [a owl:Restriction ;
                   owl:onProperty NS4:centerOfMass ;
                   owl:allValuesFrom NS4:i6013],
                   [a owl:Restriction ;
                   owl:onProperty NS0:hasComponent ;
                   owl:minQualifiedCardinality "0"^^xsd:nonNegativeInteger
 ;
                   owl:onClass NS4:i18170],
                   [a owl:Restriction ;
                   owl:onProperty NS4:inertia ;
                   owl:allValuesFrom NS4:i18170].
                   NS4:i1019 ta:accessRestrictions "0"^^xsd:unsignedShort;
      ta:browseName
 "http://opcfoundation.org/UA/Robotics/MotorType"^^xsd:anyURI;
      ta:description "The MotorType is for representing instances of electric
 motors."^^rdf:PlainLiteral;
      ta:displayName "MotorType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/i1019^^"xsd:anyURI;
      ta:userWriteMask "0"^^xsd:unsignedInt;
      ta:writeMask "0"^^xsd:unsignedInt;
      a owl:Class;
      rdfs:label "MotorType";
      rdfs:subClassOf NS3:i15063,
                   [a owl:Restriction ;
                   owl:onProperty NS0:hasComponent ;
                   owl:allValuesFrom NS4:i5105],
                   [a owl:Restriction ;
                   owl:onProperty NS3:parameterSet ;
                   owl:allValuesFrom NS4:i5105],
                   [a owl:Restriction ;
                   owl:onProperty NS0:hasProperty ;
                   owl:allValuesFrom NS4:i17101],
                   [a owl:Restriction ;
                   owl:onProperty NS3:manufacturer ;
                   owl:allValuesFrom NS4:i17101],
                   [a owl:Restriction ;
                   owl:onProperty NS0:hasProperty ;
                   owl:allValuesFrom NS4:i17103],
                   [a owl:Restriction ;
                   owl:onProperty NS3:model ;
                   owl:allValuesFrom NS4:i17103],
                   [a owl:Restriction ;
                   owl:onProperty NS0:hasProperty ;
                   owl:allValuesFrom NS4:i17109],
                   [a owl:Restriction ;
                   owl:onProperty NS3:productCode ;
                   owl:allValuesFrom NS4:i17109],
                   [a owl:Restriction ;
                   owl:onProperty NS0:hasProperty ;
                   owl:allValuesFrom NS4:i17104],
                   [a owl:Restriction ;
                   owl:onProperty NS3:serialNumber ;
                   owl:allValuesFrom NS4:i17104],
                   [a owl:Restriction ;
                   owl:onProperty NS4:i18181 ;
                   owl:minQualifiedCardinality "0"^^xsd:nonNegativeInteger
 ;
                   owl:onClass [a NS4:i18727]],
                   [a owl:Restriction ;
                   owl:onProperty NS4:i18180 ;
                   owl:minQualifiedCardinality "0"^^xsd:nonNegativeInteger
 ;
                   owl:onClass [a NS4:i18763]].
 NS4:i1022 ta:accessRestrictions "0"^^xsd:unsignedShort;
      ta:browseName
 "http://opcfoundation.org/UA/Robotics/GearType"^^xsd:anyURI;
      ta:description "The GearType describes a gear in a power train, e.g. a
 gear box or a spindle."^^rdf:PlainLiteral;
      ta:displayName "GearType"^^rdf:PlainLiteral;
      ta:isAbstract "False"^^xsd:boolean;
      ta:is0bjectType true;
      ta:nodeClass "8"^^xsd:int;
      ta:nodeId "http://opcfoundation.org/UA/Robotics/il022"^^xsd:anyURI;
      ta:userWriteMask "0"^^xsd:unsignedInt;
      ta:writeMask "0"^^xsd:unsignedInt;
      a owl:Class;
      rdfs:label "GearType";
      rdfs:subClassOf NS3:i15063,
                   [a owl:Restriction ;
                   owl:onProperty NS0:hasProperty ;
                   owl:allValuesFrom NS4:i17152],
                   [a owl:Restriction ;
                   owl:onProperty NS3:manufacturer ;
                   owl:allValuesFrom NS4:i17152],
                   [a owl:Restriction ;
                   owl:onProperty NS0:hasProperty ;
                   owl:allValuesFrom NS4:i17154],
                   [a owl:Restriction ;
                   owl:onProperty NS3:model ;
                   owl:allValuesFrom NS4:i17154],
                   [a owl:Restriction ;
                   owl:onProperty NS0:hasProperty ;
                   owl:allValuesFrom NS4:i17160],
                   [a owl:Restriction ;
                   owl:onProperty NS3:productCode ;
                   owl:allValuesFrom NS4:i17160],
                   [a owl:Restriction ;
                   owl:onProperty NS0:hasProperty ;
                   owl:allValuesFrom NS4:i17155],
                   [a owl:Restriction ;
                   owl:onProperty NS3:serialNumber ;
                   owl:allValuesFrom NS4:i17155],
                   [a owl:Restriction ;
                   owl:onProperty NS0:hasComponent ;
                   owl:allValuesFrom NS4:i15941],
                   [a owl:Restriction ;
                   owl:onProperty NS4:gearRatio ;
                   owl:allValuesFrom NS4:i15941],
                   [a owl:Restriction ;
                   owl:onProperty NS0:hasComponent ;
                   owl:minQualifiedCardinality "0"^^xsd:nonNegativeInteger
 ;
                   owl:onClass NS4:i17165],
                   [a owl:Restriction ;
                   owl:onProperty NS4:pitch ;
                   owl:allValuesFrom NS4:i17165],
                   [a owl:Restriction ;
                   owl:onProperty NS4:i18181 ;
                   owl:minQualifiedCardinality "0"^^xsd:nonNegativeInteger
 ;
                   owl:onClass [a NS4:i18764]].
 NS4:i15008 ta:accessRestrictions "0"^^xsd:unsignedShort;
       ta:browseName
 "http://opcfoundation.org/UA/Robotics/%3CMotionDeviceIdentifier%3E"^^xsd:anyURI;
       ta:description ""^^rdf:PlainLiteral;
       ta:displayName "<MotionDeviceIdentifier>"^^rdf:PlainLiteral;
       ta:eventNotifier "0"^^xsd:unsignedByte;
       ta:isInstanceDeclaration true;
       ta:isObject true;
       ta:nodeClass "1"^^xsd:int;
       ta:nodeId "http://opcfoundation.org/UA/Robotics/i15008"^^xsd:anyURI;
       ta:userWriteMask "0"^^xsd:unsignedInt;
       ta:writeMask "0"^^xsd:unsignedInt;
       a owl:Class;
       rdfs:label "MotionDeviceIdentifier";
       rdfs:subClassOf [a owl:Restriction ;
                    owl:onProperty NS0:hasTypeDefinition ;
                    owl:allValuesFrom NS4:i1004],
                   NS4:i5002,
                   me:Object,
                    [a owl:Restriction ;
                    owl:onProperty ia:browseName ;
                    owl:hasValue
 "http://opcfoundation.org/UA/Robotics/<MotionDeviceIdentifier>"^^xsd:anyURI],
                    [a owl:Restriction ;
                    owl:onProperty NS0:hasComponent ;
                    owl:allValuesFrom NS4:i15024],
                    [a owl:Restriction ;
                    owl:onProperty NS3:parameterSet ;
                    owl:allValuesFrom NS4:i15024],
                    [a owl:Restriction ;
                    owl:onProperty NS0:hasProperty ;
                    owl:allValuesFrom NS4:i15045],
                    [a owl:Restriction ;
                    owl:onProperty NS3:manufacturer ;
                    owl:allValuesFrom NS4:i15045],
                    [a owl:Restriction ;
                    owl:onProperty NS0:hasProperty ;
                    owl:allValuesFrom NS4:i15047],
                    [a owl:Restriction ;
                    owl:onProperty NS3:model ;
                    owl:allValuesFrom NS4:i15047],
                    [a owl:Restriction ;
                    owl:onProperty NS0:hasProperty ;
                    owl:allValuesFrom NS4:i15053],
                    [a owl:Restriction ;
                    owl:onProperty NS3:productCode ;
                    owl:allValuesFrom NS4:i15053],
                    [a owl:Restriction ;
                    owl:onProperty NS0:hasProperty ;
                    owl:allValuesFrom NS4:i15048],
                    [a owl:Restriction ;
                    owl:onProperty NS3:serialNumber ;
                    owl:allValuesFrom NS4:i15048],
                    [a owl:Restriction ;
                    owl:onProperty NS0:hasProperty ;
                    owl:allValuesFrom NS4:i15058],
                    [a owl:Restriction ;
                    owl:onProperty NS4:motionDeviceCategory ;
                    owl:allValuesFrom NS4:i15058],
                    [a owl:Restriction ;
                    owl:onProperty NS0:hasComponent ;
                    owl:allValuesFrom NS4:i15062],
                    [a owl:Restriction ;
                    owl:onProperty NS4:axes ;
                    owl:allValuesFrom NS4:i15062],
                    [a owl:Restriction ;
                    owl:onProperty NS0:hasComponent ;
                    owl:allValuesFrom NS4:i15208],
                    [a owl:Restriction ;
                    owl:onProperty NS4:powerTrains ;
                    owl:allValuesFrom NS4:i15208].
                    NS4:i15024 ta:accessRestrictions "0"^^xsd:unsignedShort;
       ta:browseName "http://opcfoundation.org/UA/DI/ParameterSet"^^xsd:anyURI;
       ta:description "Flat list of Parameters"^^rdf:PlainLiteral;
       ta:displayName "ParameterSet"^^rdf:PlainLiteral;
       ta:eventNotifier "0"^^xsd:unsignedByte;
       ta:isInstanceDeclaration true;
       ta:isObject true;
       ta:nodeClass "1"^^xsd:int;
       ta:nodeId "http://opcfoundation.org/UA/Robotics/i15024"^^xsd:anyURI;
       ta:userWriteMask "0"^^xsd:unsignedInt;
       ta:writeMask "0"^^xsd:unsignedInt;
       a owl:Class;
       rdfs:label "ParameterSet";
       rdfs:subClassOf [a owl:Restriction ;
                    owl:onProperty NS0:hasTypeDefinition ;
                    owl:allValuesFrom NS0:BaseObjectType],
                   NS4:i15008,
                   me:Object,
                    [a owl:Restriction ;
                    owl:onProperty ia:browseName ;
                    owl:hasValue
 "http://opcfoundation.org/UA/DI/ParameterSet"^^xsd:anyURI],
                    [a owl:Restriction ;
                    owl:onProperty NS0:hasComponent ;
                    owl:allValuesFrom NS4:i15061],
                    [a owl:Restriction ;
                    owl:onProperty NS4:speedOverride ;
                    owl:allValuesFrom NS4:i15061].
                    NS5:i5006 NS3:manufacturer NS5:i6012;
      NS3:model NS5:i6013;
      NS3:parameterSet NS5:i5012;
      NS3:productCode NS5:i6015;
      NS3:serialNumber NS5:i6016;
      ia:accessRestrictions "0"^^xsd:unsignedShort;
      ia:browseName
 "http://opcfoundation.org/UA/Robotics/MotionDevice_1"^^xsd:anyURI;
      ia:description ""^^rdf:PlainLiteral;
      ia:displayName "MotionDevice_1"^^rdf:PlainLiteral;
      ia:eventNotifier "0"^^xsd:unsignedByte;
      ia:isInstanceDeclaration false;
      ia:isObject true;
      ia:nodeClass "1"^^xsd:int;
      ia:nodeId "http://example.kuka.robot/i5006"^^xsd:anyURI;
      ia:userWriteMask "0"^^xsd:unsignedInt;
      ia:writeMask "0"^^xsd:unsignedInt;
      NS4:axes NS5:i5011;
      NS4:motionDeviceCategory NS5:i6014;
      NS4:powerTrains NS5:i5013;
      NS0:hasComponent NS5:i5011,
                   NS5:i5012,
                   NS5:i5013;
      NS0:hasProperty NS5:i6012,
                   NS5:i6013,
                   NS5:i6014,
                   NS5:i6015,
                   NS5:i6016;
      NS0:hasTypeDefinition NS4:i1004;
      a NS4:i1004,
        owl:NamedIndividual,
        me:Object;
      rdfs:label "MotionDevice_1".
      NS5:i5017 NS3:parameterSet NS5:i5020;
      ia:accessRestrictions "0"^^xsd:unsignedShort;
      ia:browseName "http://example.kuka.robot/Axis_1"^^xsd:anyURI;
      ia:description ""^^rdf:PlainLiteral;
      ia:displayName "Axis_1"^^rdf:PlainLiteral;
      ia:eventNotifier "0"^^xsd:unsignedByte;
      ia:isInstanceDeclaration false;
      ia:isObject true;
      ia:nodeClass "1"^^xsd:int;
      ia:nodeId "http://example.kuka.robot/i5017"^^xsd:anyURI;
      ia:userWriteMask "0"^^xsd:unsignedInt;
      ia:writeMask "0"^^xsd:unsignedInt;
      NS4:motionProfile NS5:i6026;
      NS0:hasComponent NS5:i5020;
      NS0:hasProperty NS5:i6026;
      NS0:hasTypeDefinition NS4:i16601;
      a NS4:i16601,
        owl:NamedIndividual,
        me:Object;
      rdfs:label "Axis_1".
```

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for generating a query for querying an ontology pertaining to at least one component of an industrial automation control system, the ontology being a result of a transformation of a nodeset defined by a graph-based information model for industrial automation purposes, the method including the steps of:
- loading the ontology into a triple store;
- accessing a node identification table for retrieving a browse path and decomposing the browse path into an ordered sequence of node names;
- composing a selection query including a plurality of selection criteria, wherein
- at least one selection criterion is applied to a node name in said ordered sequence of node names, the at least one selection criterion requiring a node assigned to said node name of having instantiated either a component or a property in said graph-based information model, said component or said property being a successor node in the ordered sequence of node names; and;
- at least one selection criterion is referring to a node name of a preceding selection criterion in said plurality of selection criteria.
- structuring the query by a semantic query language using the selection query and outputting the query.

2. The method according to claim 1, including the step of inserting at least one insert query into a source code of the ontology before loading the ontology into a triple store.

3. The method according to claim 2, the insert query simplifying effecting a replacement of at least one object restriction by at least one triple.

4. The method according to one of the aforementioned claims, including the step of accessing a nodeset for identifying at least one instance declarations within the browse path.

5. The method according to one of the aforementioned claims, including the step of accessing a modeling rule assigned to said at least one instance declaration and determining a quantity of instances to be instantiated by said at least one instance declaration.

6. The method according to one of the aforementioned claims, wherein the graph-based information model is a nodeset of an OPC UA information model or a nodeset of a companion specification of an OPC UA information model.

7. The method according to one of the aforementioned claims, wherein the semantic ontology language is one of an RDF, OWL and RDFS or RDF schema.

8. The method according to one of the aforementioned claims, wherein the node identification table is a node ID table of a companion specification according to an OPC UA information model.

9. A query generation unit for generating a query for querying an ontology pertaining to at least one component of an industrial automation control system, the ontology being a result of a transformation of a nodeset defined by a graph-based information model for industrial automation purposes, the unit comprising:
a processor; and;
a data storage device having stored thereon computer executable program code, which, when executed by the processor,
causes the processor to:
- load the ontology into a triple store;
- access a node identification table for retrieving a browse path and decompose the browse path into an ordered sequence of node names;
- compose a selection query including a plurality of selection criteria, wherein
- at least one selection criterion is applied to a node name in said ordered sequence of node names, the at least one selection criterion requiring a node assigned to said node name of having instantiated either a component or a property in said graph-based information model, said component or said property being a successor node in the ordered sequence of node names; and;
- at least one selection criterion is referring to a node name of a preceding selection criterion in said plurality of selection criteria.
- structure the query by a semantic query language using the selection query and outputting the query.
